Europäisches Patentamt

European Patent Office

Office européen des brevets

(19)

(11) Veröffentlichungsnummer : **0 514 331 A2**

## (12) EUROPÄISCHE PATENTANMELDUNG

(21) Anmeldenummer : 92810335.7

(22) Anmeldetag : 07.05.92

(51) Int. Cl.$^5$ : **B27K 3/52, B27K 3/34**

(30) Priorität : 12.05.91 DE 4115194

(43) Veröffentlichungstag der Anmeldung :
19.11.92 Patentblatt 92/47

(84) Benannte Vertragsstaaten :
AT BE DE DK ES FR GB GR IT LU NL SE

(71) Anmelder : ACIMA, Aktiengesellschaft für
Chemische Industrie Im Ochsensand
CH-9470 Buchs SG (CH)

(72) Erfinder : Marx, Hans-Norbert
Türkenlouisstrasse 5
W-7580 Bühl-Vimbuch (DE)
Erfinder : Tscholl, Heinz-Peter, Dr.
Bogenstrasse 10
CH-9470 Werdenberg SG (CH)

(54) Holzschutzmittel.

(57)   Holzschutzmittel auf Basis hochlöslicher Verbindungen aus Polyalkoholen und Borsäure. Durch besondere Massnahmen bei der Herstellung entstehen kristallisationsfeste, neutrale Estersalze, die eine hohe Wirksamkeit gegen holzzerstörende Pilze und Insekten aufweisen.

EP 0 514 331 A2

Es ist bekannt und Stand der Technik, Borsäure, ihre Salze und Ester zum Schutz von Holz und Holzprodukten (Holzwerkstoffe) einzusetzen. Die Schutzwirkung umfaßt sowohl die holzzerstörenden Pilze als auch holzzerstörende Insekten. Außerdem setzt die Borsäure bzw. deren Verbindungen die Entflammbarkeit des Holzes herab.

Weiter ist es geübte Praxis, borhaltige Holzschutzmittel in flüssiger Form (wassergelöste Konzentrate) zuzubereiten, um die Handhabung zu erleichtern und um Staubbildung zu vermeiden. Nachteilig ist, daß Borsäure und ihre Salze in Wasser nur wenig löslich sind.

Mit Hilfe von organischen Aminen, insbesondere Alkanolaminen, läßt sich die Löslichkeit von Borsäure und borsauren Salzen beträchtlich erhöhen, so daß die Herstellung hoch borhaltiger wässriger Konzentrate möglich ist.

Der Nachteil dieser Formulierungen ist, daß die organischen Amine nach der Anwendung der Holzschutzmittel langsam verdampfen und die Raumluft bzw. Atemluft belasten. Die toxikologische Wirkung von organischen Aminen sollte bei diesen Betrachtungen nicht unterschätzt werden. Ein weiterer Nachteil von borhaltigen Holzschutzmitteln, die organische Amine enthalten, liegt darin, daß das behandelte Holz sich gelblich bis bräunlich verfärbt. Dieser Vorgang wird durch Lichteinwirkung deutlich verstärkt (Vergilbungseffekt). Farblose Holzbehandlungen sind auf diesem Weg nicht möglich.

Im Rahmen von Entwicklungen, die genannten Nachteile zu beseitigen, wurden folgende überraschende Effekte gefunden:

Borsäure bildet in wässriger Lösung in Gegenwart von mehrwertigen Alkoholen cyclische Ester, hierbei werden in der Regel zwei benachbarte Hydroxyl-Gruppen der Alkohole von zwei Hydroxyl-Gruppen der Borsäure verestert. Die Acidität der verbleibenden dritten OH-Gruppe der Borsäure wird durch diese Reaktion erheblich gesteigert. Von dieser Erscheinung macht man bei der Titration von Borsäure in der Analytik Gebrauch.

Neutralisiert man die dritte Hydroxyl-Gruppe der Borsäure mit Alkali- oder Erdalkalihydroxiden oder -carbonaten, dann lassen sich hoch borsäurehaltige wässrige Lösungen herstellen. Die Kristallisationsstabilität dieser Zubereitungen ist allerdings noch nicht sehr hoch. Insbesondere bei niedrigen Temperaturen treten Ausfällungen auf. Überraschenderweise bleiben diese Ausfällungen aus, wenn man bei der Neutralisation soviel an Hydroxid, Carbonat etc. zusetzt, daß der Neutralisationspunkt deutlich überschritten wird (>pH 7) und anschließend den pH-Wert mit einer anderen Säure, z. B. Mineralsäuren, auf pH 5 - 7 absenkt.

Man erhält auf diesem Wege Zubereitungen, die bis zu 400 g und mehr Borsäure pro Liter Lösung enthalten können.

Bemerkenswert ist, daß das Verhältnis Borsäure/Polyalkohol nicht stöchiometrisch sein muß.

Als Alkohole haben sich vor allem zuckerartige Verbindungen (Pentosen, Hexosen etc.) für solchartige Zubereitungen geeignet. Die Polyalkohole können auch zusätzlich Carboxylgruppen (z.B. Zuckersäure) tragen oder anderweitig substituiert sein. Vorteilhaft kann auch die Mischung verschiedener Zucker sein.

Als Neutralisationsmittel eignen sich die Hydroxide von Natrium, Kalium, Lithium, Calzium, Strontium, Barium, Magnesium aber auch weniger basische Stoffe wie z. B. Zinkhydroxid, analog auch die Oxide bzw. Carbonate der genannten Metalle. Durch Mischen der genannten Stoffe kann die Löslichkeit weiter gesteigert werden.

Zur Senkung des pH-Wertes nach erfolgter Neutralisation (bzw. Überneutralisation) eignen sich z. B. Salzsäure, Schwefelsäure, Salpetersäure und organische Säuren wie z. B. Citronensäure, Weinsäure, Apfelsäure. Als besonders geeignet hat sich die Phosphorsäure ($H_3PO_4$) erwiesen. Es können auch Gemische von Säuren verwendet werden.

Auf dem beschriebenen Weg lassen sich farblose, wasserklare konzentrierte Lösungen von Borsäure in Wasser erhalten, die folgende Vorteile in der Anwendung bieten:

1. Lagerstabiles, kristallisationsbeständiges Holzschutzmittel
2. Unbegrenzte Mischbarkeit mit Wasser und niedrigen Alkoholen
3. Kein Geruch des behandelten Holzes
4. Keine Verfärbung des behandelten Holzes
5. Keine Raumluftbelastung
6. Günstiges toxikologisches Profil

Gerade toxikologische Aspekte bestimmen die Einsatzfähigkeit von bioziden Zubereitungen im Wohn- und Lebensbereich. Verwendet man zur Zubereitung z. B. Zuckerarten, die als Nahrungsmittel genutzt werden oder Zuckeraustauschstoffe mit lebensmittelrechtlicher Zulassung wie Sorbitol, dann wird das toxikologische Profil allein durch die Wirkstoffe (Borsäure, Borate) bestimmt und nicht durch zusätzliche Hilfsstoffe wie organische Amine.

Die erfindungsgemäße Zubereitung zeigt zusätzlich eine ausgezeichnete lösende bzw. lösungsvermittelnde Wirkung für weitere Stoffe, so daß es möglich ist, biozide anorganische und organische Stoffe beizugeben, z.B. Fluoride, Kupferverbindungen, Zinkverbindungen, Pyrethroide, Carbamate, Benzimidazolderivate, Organozinnverbindungen, Triazolderivate, Phenole, Quats etc.. Auf diesem Weg läßt sich die Wirkungsbreite den Erfordernissen anpassen, z.B. in Form eines Bläue- oder Schimmelschutzes.

Mischungsverhältnisse :

Das erfindungsgemäße Gemisch enthält auf 1 Gewichtsteil Borsäure 0.3 bis 3 Teile Polyalkohol, vorzugsweise 0.7 bis 1.5 Teile. Die erforderliche Menge an basischen Stoffen ergibt sich aus der Basenkapazität, die Zugabe erfolgt bis zum deutlichen Überschreiten des Neutralpunktes. Sinngemäß das Gleiche gilt für die Säuremenge, die notwendig ist, um anschließend einen pH-Wert von 5 - 7 einzustellen.

Beispiel 1:

```
1.0 Gewichtsteile Borsäure
0.7 Gewichtsteile δ-Sorbitol
                                  bei max. 60°C in
2.0 Gewichtsteile Wasser          lösen
                                  Kaliumhydroxid zugeben, bis pH 8 erreicht ist.
                                  60 Minuten bei 60°C rühren, Citronensäure zugeben
                                  bis pH 6.5 erreicht ist.
```

Beispiel 2:

```
1.0 Gewichtsteile Borsäure
0.8 Gewichtsteile Dulcit
                                  bei 50°C in
1.5 Gewichtsteile Wasser          lösen
0.2 Gewichtsteile Zinkoxid        zugeben
                                  Kaliumhydroxid zugeben, bis pH 8.5 erreicht ist.
                                  60 Minuten bei 50°C rühren, Schwefelsäure zugeben
                                  bis pH 6.0 erreicht ist.
```

Beispiel 3:

```
1.0 Gewichtsteile Borsäure
1.0 Gewichtsteile Mannit
                                  bei max. 60°C in
1.0 Gewichtsteile Wasser          lösen
                                  Natriumhydroxid zugeben, bis pH 8.2 erreicht ist.
                                  30 Minuten bei 60°C rühren, Phosphorsäure zugeben
                                  bis pH 6.3 erreicht ist.
0.2 Gewichtsteile N,N-Dimethyl-N-benzyl-N-tridecylammoniumchlorid
```

Beispiel 4:

```
1.0 Gewichtsteile Borsäure
1.0 Gewichtsteile Gluconsäure
                              bei max. 70°C in
1.0 Gewichtsteile Wasser      lösen
                              Natriumhydroxid zugeben, bis pH 8.5 erreicht ist.
                              30 Minuten bei 50°C rühren, Phosphorsäure zugeben
                              bis pH 6.0 erreicht ist.
```

Die erfindungsgemäß hergestellten Zubereitungen können unverdünnt zur Oberflächenbehandlung (Randschutz) von Holz und Holzprodukten eingesetzt werden.

In Form der wässrigen Verdünnungen eignen sich die Schutzmittel für die Tauch- und Trogtränkung von Holz und Holzprodukten, sowie zur Kesseldruck-, Kesselvakuumdruck-, Wechseldruck- und Doppelvakuumtränkung. Auch reine Diffusionstränkung ist möglich.

Bei erhöhtem Mengenaufwand wird die Entflammbarkeit von Holz und Holzprodukten herabgesetzt.

Weiterhin ist es möglich, das erfindungsgemäße Holzschutzmittel zum Schutz von Holzwerkstoffen (Spanplatten, Sperrholz) direkt der Leimflotte zuzugeben.

**Patentansprüche**

**Anspruch 1:**
Mittel zum vorbeugenden und bekämpfenden Schutz von Holz und Holzprodukten, dadurch gekennzeichnet, daß Borsäure mit Polyalkoholen, vorzugsweise zuckerartigen Substanzen teilverestert wird, daß die restlichen Säuregruppen mit einem Überschuß an basischen Stoffen, vorzugsweise Metalloxide und/oder -hydroxide, neutralisiert und anschließend der Basenüberschuß mit Säuren auf einen pH-Wert von 5 - 7 eingestellt wird.

**Anspruch 2:**
Mittel zum vorbeugenden und bekämpfenden Schutz von Holz und Holzprodukten gemäß Anspruch 1, dadurch gekennzeichnet, daß vorzugsweise 2 der 3 Säuregruppen (OH-Gruppen) der Borsäure verestert werden.

**Anspruch 3:**
Mittel zum vorbeugenden und bekämpfenden Schutz von Holz und Holzprodukten gemäß Anspruch 1, dadurch gekennzeichnet, daß es sich bei dem Polyalkohol vorzugsweise um Sorbitol handelt.

**Anspruch 4:**
Mittel zum vorbeugenden und bekämpfenden Schutz von Holz und Holzprodukten gemäß Anspruch 1, dadurch gekennzeichnet, daß es sich bei der Säure, mit der der pH-Wert auf 5 - 7 eingestellt wird, vorzugsweise um Phosphorsäure handelt.

**Anspruch 5:**
Mittel zum vorbeugenden und bekämpfenden Schutz von Holz und Holzprodukten gemäß Anspruch 1, dadurch gekennzeichnet, daß weitere anorganische und organische Biozide dem System beigegeben werden können.

**Anspruch 6:**
Mittel zum vorbeugenden und bekämpfenden Schutz von Holz und Holzprodukten gemäß Anspruch 1, dadurch gekennzeichnet, daß die Zubereitung auch zum Schutz von Holz und Holzprodukten gegen Entflammung eingesetzt werden kann.